# EUROPEAN PATENT APPLICATION

(11) **EP 3 091 444 A2**
(43) Date of publication of application: **09.11.2016**
(21) Application number: 16157897.6
(22) Date of filing: 29.02.2016
(51) Int. Cl.: G06F 17/27, G06F 17/30

(54) **PROBABILISTIC MODEL FOR TERM CO-OCCURRENCE SCORES**

(30) Priority: 30.04.2015 GB 201507505
(71) Applicant: FUJITSU LIMITED, Kawasaki-shi Kanagawa 211-8588 (JP)
(72) Inventor: MITSUISHI, Yutaka, Galway (IE); NOVÁCEK, Vit, Galway (IE)
(74) Representative: Fenlon, Christine Lesley

(57) **Abstract**

Apparatus for calculating term co-occurrence scores for use in a natural language processing method, where a term is a word or a group of consecutive words, in which apparatus at least one text document is analysed and pairs of terms, from terms which occur in the document, are ascribed respective co-occurrence scores to indicate an extent of an association between them, comprises sentence sequence processing means (280) and co-occurrence score set calculation means (230), wherein: the sentence sequence processing means (280) are operable to: for each of all possible sequences of sentences in a document, where the minimum number of sentences in a sequence is one and the maximum number of sentences in a sequence has a predetermined value, determine a weighting value w which is a decreasing function of the number of sentences in the sentence sequence; determine a sentence sequence count value, based on the sum of all the determined weighting values; obtain a document term count value, where the document term count value is the sum of sentence sequence term count values determined for all the sentence sequences, each sentence sequence term count value indicating the frequency with which a term occurs in a sentence sequence and being based on the weighting value for the sentence sequence; and for each of all possible different term pairs in all sentence sequences, where a term pair consists of a term in a sentence sequence paired with another term in the sentence sequence, obtain a term pair count value which is the sum of the weighting values for all sentence sequences in which the term pair occurs; and the co-occurrence score set calculation means (230) are operable to obtain a term co-occurrence score for each term pair using the document term count values for the terms in the pair, the term pair count value for the term pair and the sentence sequence count value. Apparatus for processing sentence pairs is also disclosed.

## Description

The present invention relates to a probabilistic model for term co-occurrence scores and term similarity scores for use, for example, in the field of natural language processing.

NPMI (Normalised Pointwise Mutual Information) referred to in the paper by Gerlof Bouma, "Normalized (Pointwise) Mutual Information in Collocation Extraction", Proceedings of the Biennial GSCL Conference 2009, pp 31 to 40, 2009, is a recently proposed variation of Pointwise Mutual Information (PMI), which is a measure of association of two events used in information theory. As the name shows, it adds normalisation facility to PMI, which has the drawback that it is not normalised. PMI and NPMI are defined using probabilities as follows: $\begin{matrix}PMI \left(a, b\right) = log \frac{P \left(a, b\right)}{P \left(a\right) P \left(b\right)} \\ NPMI \left(a, b\right) = \frac{PMI \left(a, b\right)}{- logP \left(a, b\right)}\end{matrix}$

The range of NPMI is between -1 and 1. When "a" and "b" only occur together, NPMI is 1; when "a" and "b" are distributed as expected under independence, NPMI is 0; when "a" and "b" never occur together, NPMI is -1. Note that when P(a, b)=0, NPMI(a, b) is specially defined as -1 as a limit although the logarithms in the formulae are not defined.

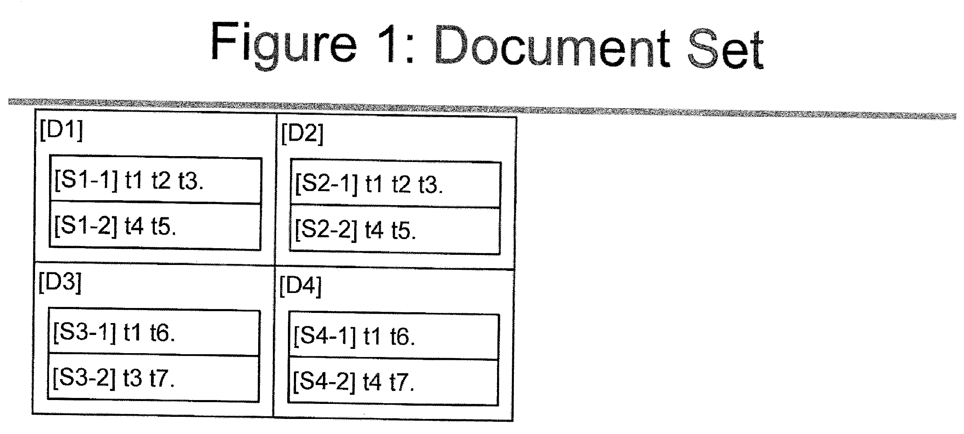

PMI is one of various widely used measures for scoring term co-occurrences in text (a term refers to a block of text consisting of one or more consecutive meaningful words; a set of terms are usually extracted from text with specific natural language processing technologies). NPMI can also be used for this purpose. A set of term co-occurrence scores generated with PMI and NPMI are useful for various natural language processing applications such as keyword clustering, recommendation system, and knowledge base construction. Simple and/or existing methods adopting PMI or NPMI have, however, a drawback that they cannot capture distance (or proximity) information well. The idea of distance/proximity is well known especially in the information retrieval (IR) domain: the closer query terms appear in a document, the higher score the document receives. This kind of idea is also thought to be useful for calculating PMI and NPMI for general natural language processing purposes. In the present application, we do not consider word-level distance/proximity but consider only sentence-level distance/proximity as a working hypothesis. That is, we do not consider how many words there are between two concerned terms, but consider how many sentences there between two concerned terms. Simple known methods for scoring term co-occurrences with NPMI (hereinafter we ignore PMI) and without distance/proximity information have drawbacks as follows:
(1) With a method we shall call "1-sentence-1-trial", a sentence is treated as one probabilistic trial, and each term and each co-occurrence of two terms in a sentence are considered to occur once (i.e. duplication is ignored). For example, this method is disclosed in US8374871 B2. For the text set consisting of four documents D1 to D4 (each has two sentences) in Figure 1, NPMI values between terms t1 and t2/t5 are calculated as follows. There are eight sentences altogether, and t1, t2, and t5 appear in four, two and two sentences respectively, so: $P \left(t1\right) = \frac{4}{8} , P \left(t2\right) = \frac{2}{8} , P \left(t5\right) = \frac{2}{8}$ t1 and t2 co-occur in two sentences, and t1 and t5 never co-occur, so: $P \left(t1,t2\right) = \frac{2}{8} , P \left(t1,t5\right) = 0$
   Substituting these values into the PMI and NPMI formulae (1) and (2), we get: $NPMI \left(t1,t2\right) = 0.5 , NPMI \left(t1,t5\right) = - 1$
   Even though t1 and t5 co-occur in two documents and it is natural for a human to think that t1 and t5 have some relationship, this method assigns -1 (which indicates no relationship) to the pair of t1 and t5, showing it is an inappropriate method.
(2) With a method we shall call "1-document-1-trial", a document is treated as one probabilistic trial, and each term and each co-occurrence of two terms in a document are considered to occur once (i.e. duplication is ignored). For example, this method is disclosed in US 5905980A. The document set in Figure 1 is used throughout the present patent specification, the set consisting of four documents denoted with document IDs D1, D2, D3 and D4. The document D1 consists of two sentences denoted with the sentence IDs S1-1 and S1-2. Similarly, the document D2 consists of two sentences denoted with sentence IDs S2-1 and S2-2, the document D3 consists of two sentences denoted with sentence IDs S3-1 and S3-2, and the document D4 consists of two sentences denoted with sentence IDs S4-1 and S4-2. Each sentence consists of one or more terms denoted as t followed by a number, such as t1 and t2. For example, the sentence S1-1 consists of three terms t1, t2 and t3. For simplicity, terms are already extracted with specific natural language technologies, and are not actual natural language terms but artificial strings such as t1 and t2. For the document set in Figure 1, NPMI values between t1 and t2/t5 are calculated as follows. There are four documents, and t1, t2, and t5 appear in four, two and two documents respectively, so: $P \left(t1\right) = \frac{4}{4} , P \left(t2\right) = \frac{2}{4} , P \left(t5\right) = \frac{2}{4}$ t1 and t2 co-occur in two documents, and t2 and t5 also co-occur in two documents, so: $P \left(t1,t2\right) = \frac{2}{4} , P \left(t1,t5\right) = \frac{2}{4}$
   Substituting these values into the PMI and NPMI formulae (1) and (2), we get: $NPMI \left(t1,t2\right) = 0 , NPMI \left(t1,t5\right) = 0$ (due to using a small text size for simplicity, NPMI values are 0 and the term pairs are considered to occur independently. In this example, concrete values are not important, but relative orders are).
   Unlike the first method, this method assigns a value to the pair of t1 and t5. The value, however, is the same as the one for the pair of t1 and t2, which is not natural for a human because t2 occurs in the same sentence as t1, that it tends to occur more closely to t1, and therefore seems more related to t1 than t5.
(3) With a method we shall call "1-term-pair-1-trial", any possible term pair in a document is treated as one probabilistic trial (also referred as one frequency). For example, this method is referred in the Japanese-language paper by Yuta Kaburagi et al., "Extraction of the Ambiguity of Words Based on the Clustering of Co-occurrence Graphs", Proceedings of the 17th Annual Meeting of the Association for Natural Language Processing, pp. 508-511, 2011. This method can easily incorporate distance/proximity information. One way is to treat a term pair as 1/(n+1) probabilistic trial, where n denotes how many sentence breaks there are between the two terms in the pair (n=0 when they appear in the same sentence). For the text set in Figure 1, NPMI between t1 and t2/t5/t6 are calculated as follows.

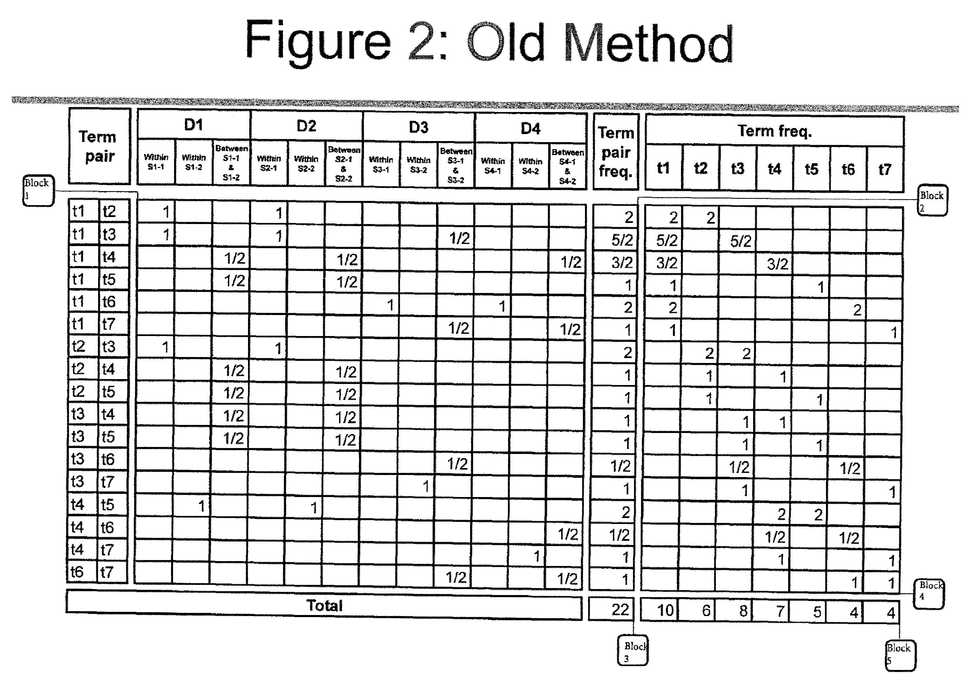

   Figure 2 summarises the calculation of various frequencies for probabilities. The table shown in Figure 2 is shown for understanding the calculation processes. The table is divided into blocks for the sake of explanation. In S1-1 in D1, there are three terms, that is, t1, t2, and t3, and possible term pairs are (t1, t2), (t1, t3), and (t2, t3). Their frequencies are 1 (=1/(0+1)) because the distance is 0. 1 is filled into the three corresponding cells in Block 1 in Figure 2. Between S1-1 and S1-2 in D1, possible term pairs are (t1, t4), (t1, t5), (t2, t4), (t2, t5), (t3, t5), and (t4, t5). Their frequencies are 1/2 (= 1/(1+1)) because the distance is 1. 1/2 is filled into the six corresponding cells in Block 1. Other cells in Block 1 are filled similarly.
   Each cell in Block 2 in Figure 2 is the sum of all the cells of the corresponding row in Block 1, and denotes the frequency of the term pair. For example, for (t1, t3), since there are 1, 1, 1/2 in Block 1, 5/2 (=1+1+1/2) is filled into the cell in Block 2. The single cell in Block 3 is the sum of all the cells in Block 2. In this example, the result is 22. This value means the total frequency and becomes a denominator for calculation of all the probabilities.
   Block 4 shows intermediate results of the term frequencies in Block 5. For each term pair, the term pair frequency in Block 2 is copied into the two cells corresponding to the two terms in the pair in Block 4.
   Each cell in Block 5 is the sum of all the cells of the corresponding column in Block 4. For example, for t1, 10 (=2+5/2+3/2+1+2+1) is filled into the cell in Block 5. This value represents the term frequency.
   With the values in Block 2, 3, and, 5, we are ready for calculation of NPMI values between t1 and t2/t5/t6. First, probabilities are calculated: $P \left(t1\right) = \frac{10}{22} , P \left(t2\right) = \frac{6}{22} , P \left(t5\right) = \frac{5}{22} , P \left(t6\right) = \frac{4}{22}$ $P \left(t1,t2\right) = \frac{2}{22} , P \left(t1,t5\right) = \frac{1}{22} , P \left(t1,t6\right) = \frac{2}{22}$
   Then, NPMI values are calculated by substituting these values into the PMI and NPMI formulae (1) and (2): $NPMI \left(t1,t2\right) = - 0.129 , NPMI \left(t1,t5\right) = - 0.266 , NPMI \left(t1,t6\right) = 0.040$ (due to using a small text size for simplicity, some NPMI values are negative and the term pairs are considered to tend to occur separately rather than independently. In this example, concrete values are not important, but relative orders are).
   Comparing t2 and t5, the NPMI values show that t2 is more related to t1 than t5, which appears natural for a human and cannot be captured with the other methods above.
   There is still a problem, however. Comparing t2 and t6, the NPMI values show that t6 is more related to t1 than t2. This is because the numbers of terms (or sentence lengths) are different between S1-1/S2-1 and S3-1/S4-1. But for a human, t2 and t6 seem to be similarly related to t1 because both co-occur with t1 twice in the same sentences and do not appear in the other sentences. Therefore this method is also inappropriate.
(4) With a method following the idea in the paper by Jianfeng Gao et al., "Resolving Query Translation Ambiguity Using a Decaying Co-occurrence Model and Syntactic Dependence Relations", Proceedings of Special Interest Group on Information Retrieval, pp. 183-190, 2002, for example, the co-occurrence score can be calculated as follows: $Score \left(t1,t2\right) = NPMI \left(t1,t2\right) \times D \left(t1,t2\right)$ where NPMI(t1, t2) is as defined in the "1-document-1-trial" method, and D(t1,t2) is a decaying function according to the average distance of t1 and t2 in the document set and takes a value between 0 and 1. With this method, the farther t1 and t2 co-occur on average, the smaller score is assigned, which is desirable. This score has two drawbacks however. First, when the score is negative, the effect is opposite to what is desired, that is the farther t1 and t2 co-occur on average, the larger the score which is assigned because a negative value multiplied by a value between 0 and 1 becomes larger though the absolute value becomes smaller. Second, the score is difficult to understand within the system of probabilistic theory.

Summarising the above, existing methods cannot treat distance/proximity information in calculating co-occurrence scores well in order to match a human's intuition.

With this background, a method of calculating a co-occurrence score satisfying the following four conditions is desirable:
A. Two terms which co-occur across one or more sentence boundaries should be taken into account.
B. If two term pairs co-occur in the same way in a document level and if one pair tends to co-occur closer in documents than another, give a higher score to the former.
C. The sentence length (number of terms) should not affect the result.
D. Scores should be probabilistically defined.

Processes according to embodiments of the present invention are defined in the appended claims.

According to an embodiment of a first aspect of the present invention, there is provided apparatus for calculating term co-occurrence scores for use in a natural language processing method, where a term is a word or a group of consecutive words, in which apparatus at least one text document is analysed and pairs of terms, from terms which occur in the document, are ascribed respective co-occurrence scores to indicate an extent of an association between them, the apparatus comprising sentence pair processing means and co-occurrence score set calculation means, wherein: the sentence pair processing means are operable to: for each of all pairs of sentences in a document, determine a weighting value w which is a decreasing function of the separation between the sentences in the sentence pair; determine a sentence pair count value, which is equal to twice the sum of all the determined weighting values or that sum multiplied by a multiplier; obtain a document term count value, where the document term count value is equal to the sum of sentence pair term count values determined for all the sentence pairs or that sum multiplied by the said multiplier, each sentence pair term count value indicating the frequency with which a term occurs in a sentence pair and being the weighting value for the sentence pair in which the term occurs multiplied by the number of sentences in which the term occurs in that pair; and for each of all possible different term pairs in all sentence pairs, where a term pair consists of a term in one sentence of a pair paired with a different term in the other sentence of the pair, obtain a term pair count value which is equal to the sum of the weighting values for all sentence pairs in which the term pair occurs or that sum multiplied by the said multiplier; and the co-occurrence score set calculation means are operable to obtain a term co-occurrence score for each term pair using the document term count values for the terms in the pair, the term pair count value for the term pair and the sentence pair count value.

The sentence pair processing means may be operable to process sentence pairs including pairs where the two sentences in the pair are the same sentence if that sentence contains more than one term.

The weighting value w may be equal to 1/(d + 1)*2, where d is the separation between the sentences in the pair.

The co-occurrence score set calculation means may be operable to: obtain a term probability value P(a) for each term using the document term count value and the sentence pair count value; obtain a term pair probability value P(a, b) for each term pair using the term pair count value and the sentence pair count value; and calculate the term co-occurrence score for each term pair using the term probability value for the terms in the pair and the term pair probability value for the term pair.

According to an embodiment of a second aspect of the present invention, there is provided apparatus for calculating term co-occurrence scores for use in a natural language processing method, where a term is a word or a group of consecutive words, in which apparatus at least one text document is analysed and pairs of terms, from terms which occur in the document, are ascribed respective co-occurrence scores to indicate an extent of an association between them, the apparatus comprising sentence sequence processing means and co-occurrence score set calculation means, wherein: the sentence sequence processing means are operable to: for each of all possible sequences of sentences in a document, where the minimum number of sentences in a sequence is one and the maximum number of sentences in a sequence has a predetermined value, determine a weighting value w which is a decreasing function of the number of sentences in the sentence sequence; determine a sentence sequence count value, based on the sum of all the determined weighting values; obtain a document term count value, where the document term count value is equal to or a multiple of the sum of sentence sequence term count values determined for all the sentence sequences, each sentence sequence term count value indicating the frequency with which a term occurs in a sentence sequence and being based on the weighting value for the sentence sequence; and for each of all possible different term pairs in all sentence sequences, where a term pair consists of a term in a sentence sequence paired with another term in the sentence sequence, obtain a term pair count value which is equal to or the said multiple of the sum of the weighting values for all sentence sequences in which the term pair occurs; and the co-occurrence score set calculation means are operable to obtain a term co-occurrence score for each term pair using the document term count values for the terms in the pair, the term pair count value for the term pair and the sentence sequence count value.

For sentence sequences of two or more sentences, the sentence sequence processing means may be operable to process sentence sequences including sequences where one or more of the sentences is a dummy sentence without terms.

The weighting value w may be equal to 1 divided by the number of sentences in the sequence, and optionally also divided by the predetermined maximum sentence number. The sentence sequence count value may be the sum of all the determined weighting values. Each sentence sequence term count value for a term may be the weighting value for the sentence sequence in which the term occurs.

The co-occurrence score set calculation means may be operable to: obtain a term probability value P(a) for each term using the document term count value and the sentence sequence count value; obtain a term pair probability value P(a, b) for each term pair using the term pair count value and the sentence sequence count value; and calculate the term co-occurrence score for each term pair using the term probability value for the terms in the pair and the term pair probability value for the term pair.

A sequence of sentences should be understood, in the context of this application, to mean a group of consecutive and/or non-consecutive sentences.

Embodiments of the first or second aspect of the present invention can calculate term co-occurrence scores which satisfy the conditions A, B, C and D above.

Reference will now be made, by way of example, to the accompanying drawings, in which:
Figure 1 (described above) shows a document set;
Figure 2 (described above) shows a set of values obtained for the document set using a prior art method;
Figure 3 is a block diagram of apparatus in accordance with a first embodiment of the present invention;
Figure 4 is a flowchart showing operation of a co-occurrence score operation unit;
Figure 5 is a flowchart showing operation of a document set input unit and illustrative document table;
Figure 6 is a flowchart showing operation of a document set processing unit and illustrative document tables;
Figure 7 is a flowchart showing operation of a document processing unit and illustrative paragraph table;
Figure 8 is a flowchart showing operation of a paragraph processing unit and illustrative sentence table;
Figure 9 is a flowchart showing operation of a sentence processing unit and illustrative term tables;
Figure 10 is a flowchart showing operation of a sentence pair set processing unit and illustrative sentence table;
Figures 11 a and 11 b are a flowchart showing operation of a sentence pair processing unit and illustrative sentence table, term table, sentence pair count tables, term count tables and term pair count tables;
Figure 12 is a flowchart showing operation of a co-occurrence score set calculation unit and illustrative sentence pair count table, term count table, term pair count table, term probability table, term pair probability table and co-occurrence score table;
Figure 13a shows a set of values obtained for the document set using a method in accordance with the first embodiment of the invention, and Figure 13b shows a corresponding sentence pair count table, term count table and term pair count table;
Figure 14 is a block diagram of apparatus in accordance with a second embodiment of the present invention;
Figure 15 is a flowchart showing operation of a paragraph processing unit and illustrative sentence table;
Figure 16 is a flowchart showing operation of a sentence sequence set processing unit and illustrative sentence table;
Figures 17a to 17d are a flowchart showing operation of a sentence pair processing unit and illustrative term table, sentence sequence count tables, term count tables and term pair count tables;
Figure 18a shows a set of values obtained for the document set using a method in accordance with the second embodiment of the invention, and Figure 18b shows a corresponding sentence sequence count table, term count table and term pair count table; and
Figure 19 is a flowchart showing operation of a co-occurrence score set calculation unit and illustrative sentence sequence count table, term count table, term pair count table, term probability table, term pair probability table and co-occurrence score table.

Two exemplary embodiments of the present invention will now be described. In the first embodiment, a sentence pair is treated as a weighted (w) probabilistic trial, where the sentence pair occurs w*2 times, each term in each sentence in the two sentences occurs w times, and each possible term pair between the two sentences occurs w times. Various sentence pairs with variable sentence distances (including 0) are processed with the weight (w) which is a decreasing function of the sentence distance.

In the second embodiment, a sentence sequence is treated as a weighted (w) probabilistic trial, where the sentence sequence occurs w times, each term in the sentence sequence, and each possible term pair in the sentence sequence occurs w times. Various sentence sequences with variable sentence sizes are processed with the weight (w) which is a decreasing function of the sentence size.

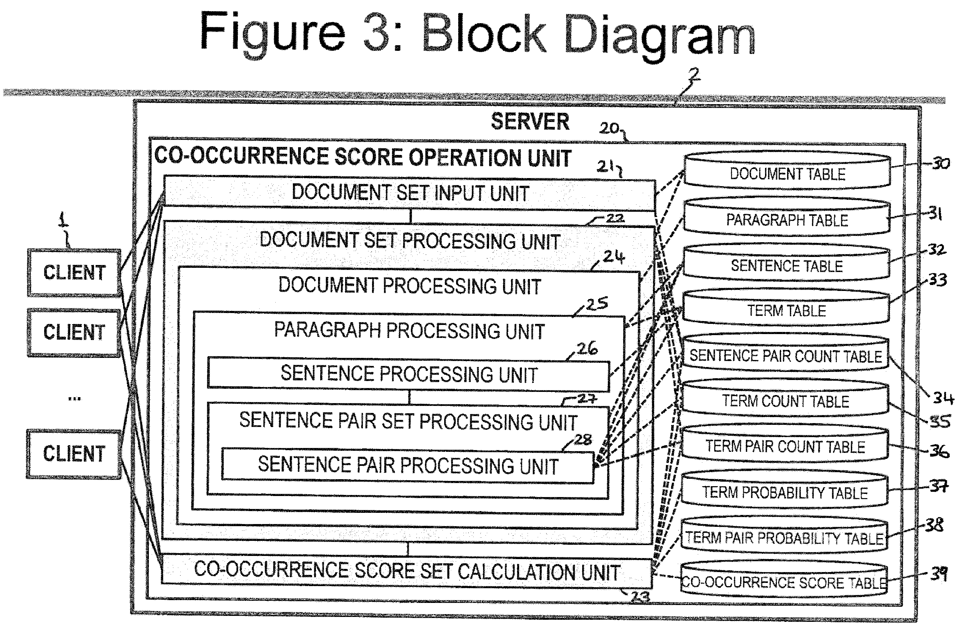

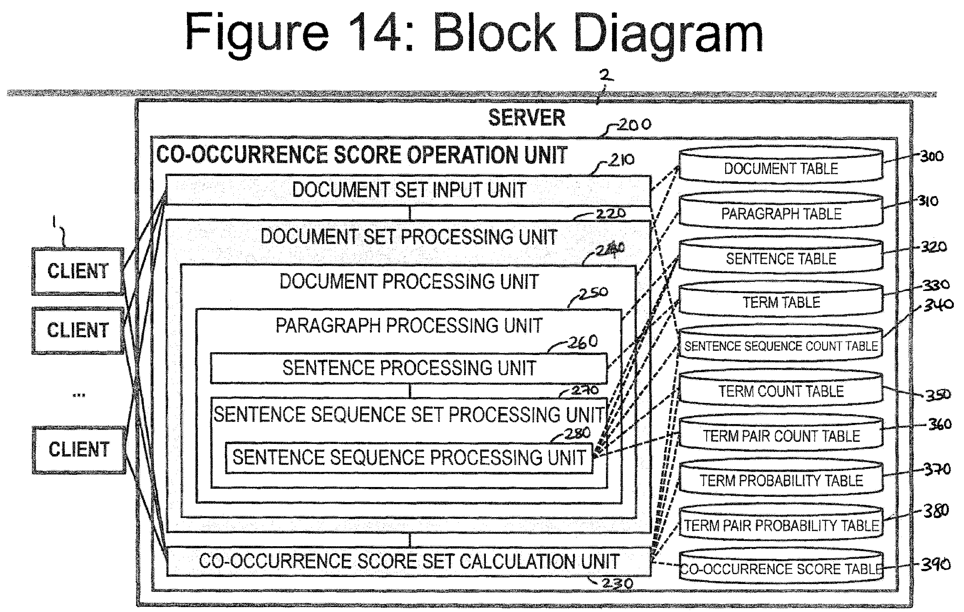

As shown in Figures 3 and 14, first and second embodiments of the present invention are described in relation to a client-server system, in which a client 1 sends a document set to a server 2 and the server 2 returns a co-occurrence score table to the client 1. However, any other reasonable systems may be adopted.

It should also be noted that, although the calculation of co-occurrence scores based on obtained probabilities is explained in the present specification with reference to NPMI, PMI or any other possible reasonable metrics can be used instead of NPMI.

### First Embodiment

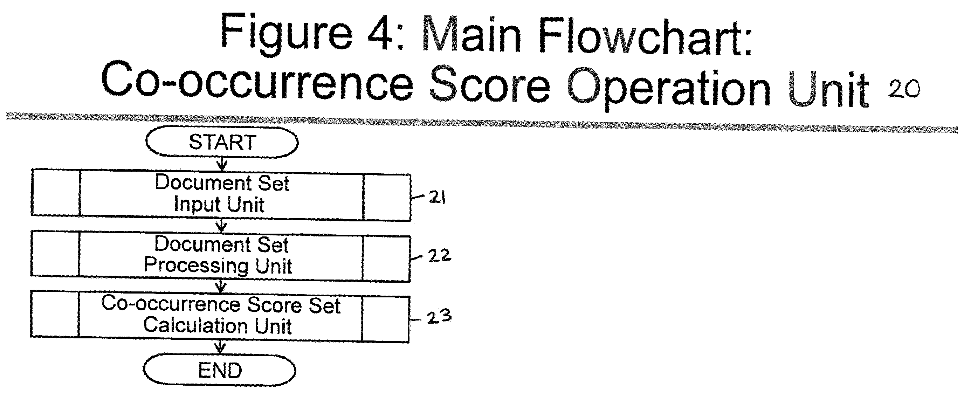

Figure 3 shows a block diagram of a system comprising apparatus in accordance with a first embodiment of the present invention. Figures 4 to 12 show flowcharts of a method in accordance with the first embodiment.

Server 2 of Figure 3 has a co-occurrence score operation unit 20 (apparatus for calculating term co-occurrence scores) configured to analyse one or more text documents, and ascribe to pairs of terms, from terms which occur in the document, respective co-occurrence scores to indicate an extent of an association between them. The co-occurrence score operation unit 20 comprises a document set input unit 21, a document set processing unit 22 and a co-occurrence score set calculation unit 23 (co-occurrence score set calculation means), and associated tables: document table 30, paragraph table 31, sentence table 32, term table 33, sentence pair count table 34, term count table 35, term pair count table 36, term probability table 37, term pair probability table 38 and co-occurrence score table 39. The document set processing unit 22 comprises a document processing unit 24. The document processing unit 24 comprises a paragraph processing unit 25, which in turn comprises a sentence processing unit 26 and a sentence pair set processing unit 27. The sentence pair set processing unit 27 comprises a sentence pair processing unit 28 (sentence pair processing means).

Figure 4 is a flowchart of the operation of the Co-occurrence Score Operation Unit 20. The Co-occurrence Score Operation Unit calls its three sub-units in turn: Document Set Input Unit 21, Document Set Processing Unit 22, and Co-occurrence Score Set Calculation Unit 23.

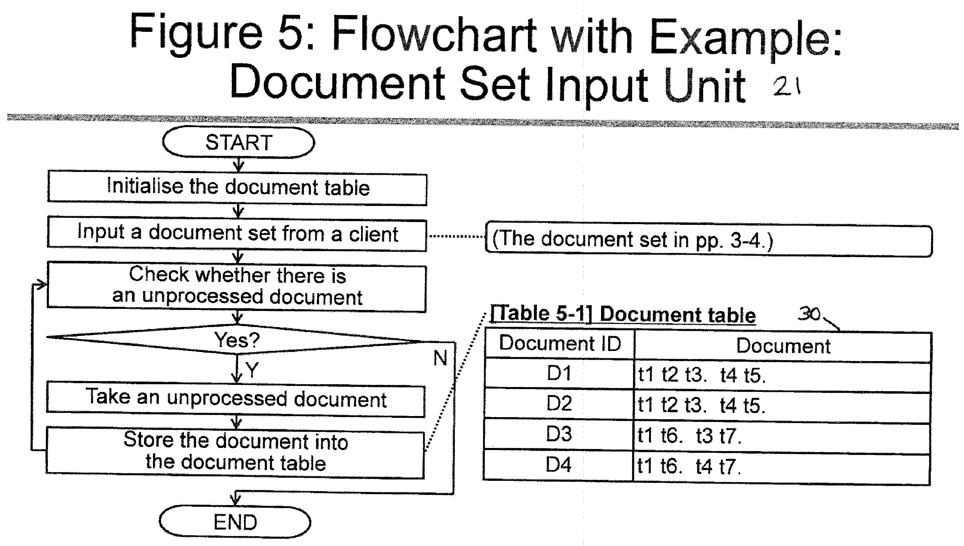

Figure 5 is a flowchart of the Document Set Input Unit 21. This unit first initialises the document table 30 (explained later). It then inputs a document set from a client 1. Next, for each document in the document set, it stores the document into the document table 30. The final document table 30 for the document set in Figure 1 is shown as Table 5-1.

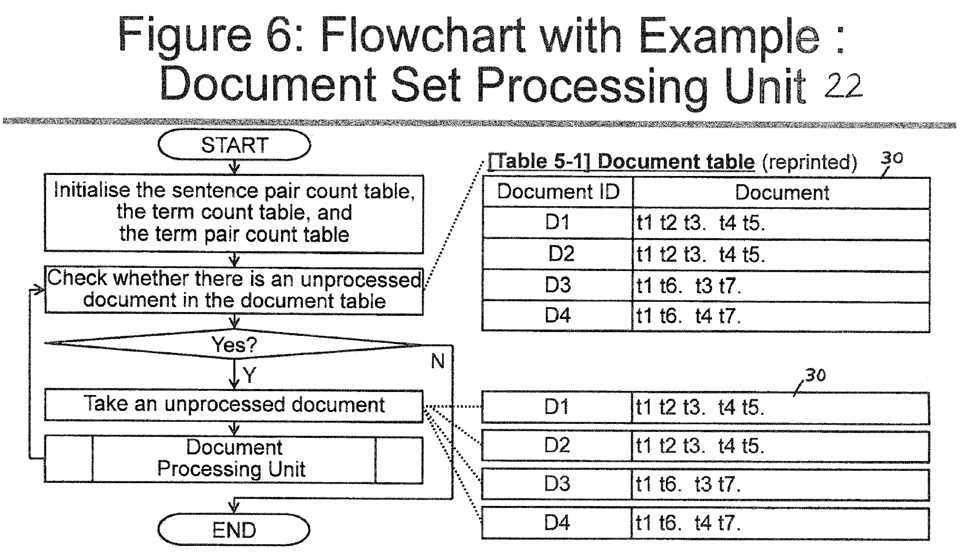

Figure 6 is a flowchart of the Document Set Processing Unit 22. This unit first initialises the sentence pair count table 34, the term count table 35, and the term pair count table 36 (explained later). Next, for each document in the document table 30 (Table 5-1) created in the Document Set Input Unit 21, it calls the Document Processing Unit 24.

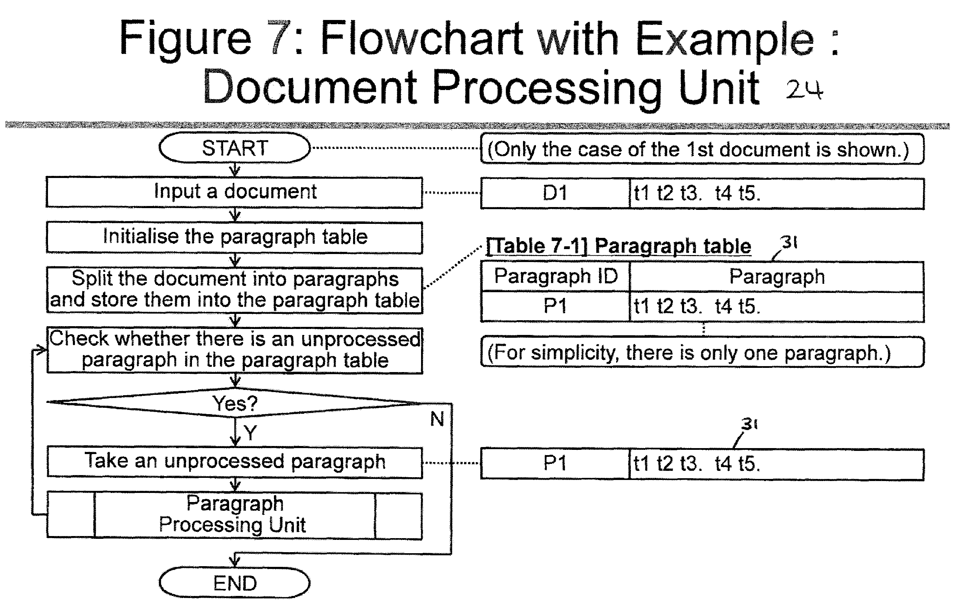

Figure 7 is a flowchart of the Document Processing Unit 24. This unit first inputs a document. In Figure 7, the process for the first document in the document table is exemplified. The unit then initialises the paragraph table 31 (explained later). Next, it splits the document into paragraphs and stores them into the paragraph table 31. One splitting method is to split a document by a new line. Another method is not to split it, that is, the document is treated as a single paragraph. Other arbitrary methods can be adopted. The reason why the unit splits a document into paragraphs is that a paragraph rather than a document might be thought to be an appropriate processing granularity. In the example here, the second method is adopted for simplicity, and the paragraph table 31 (Table 7-1) is created. Next, for each paragraph in the paragraph table 31 (Table 7-1), the unit calls the Paragraph Processing Unit 25.

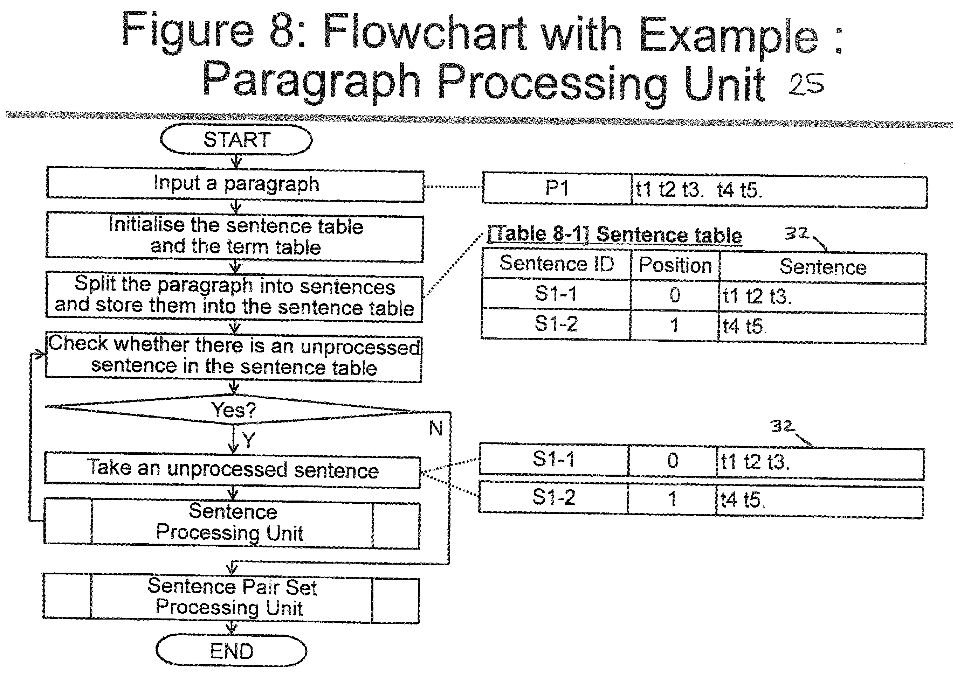

Figure 8 is a flowchart of the Paragraph Processing Unit 25. This unit first inputs a paragraph. In Figure 8, the process for the one and only paragraph (Table 7-1) in the first document in the document table 30 is exemplified. The unit then initialises the sentence table 32 and the term table 33 (explained later). Next, it splits the paragraph into sentences and stores them into the sentence table 32 with a position number in the document. One splitting method is to split a document by a period. Other arbitrary methods can be adopted. In the example here, the described method is adopted, and the sentence table 32 (Table 8-1) is created. Next, for each sentence in the sentence table 32, the unit calls the Sentence Processing Unit 26.

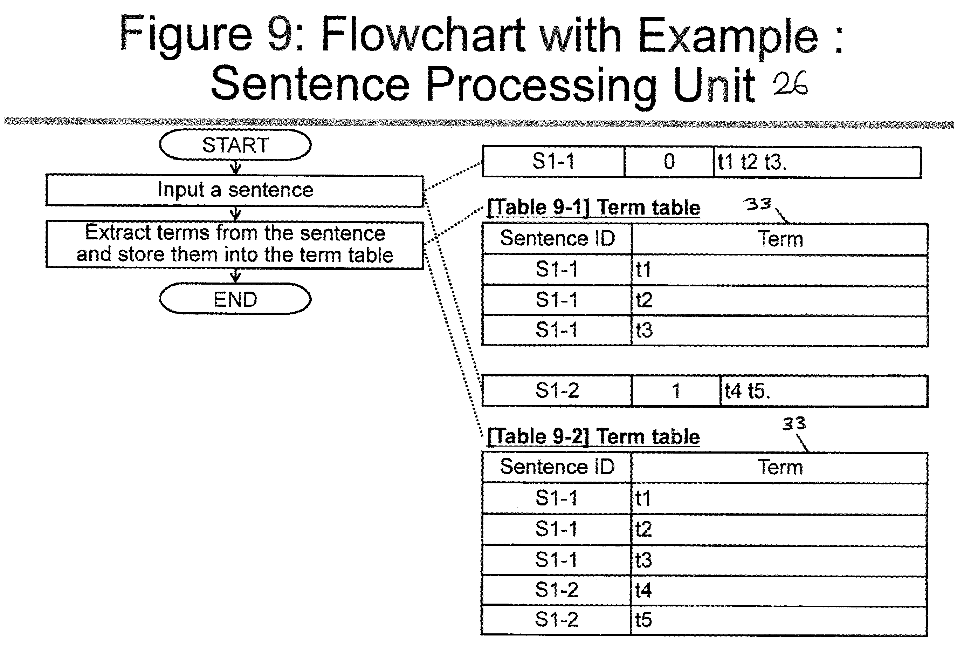

Figure 9 is a flowchart of the Sentence Processing Unit 26. This unit first inputs a sentence. In Figure 9, the process for the first and the second sentences (Table 8-1) in the one and only paragraph in the first document in the document table 30 is exemplified. The unit then extracts terms from the sentence and stores them into the term table 33. For extracting terms, arbitrary methods including one with named entity recognition can be adopted. In the example here, all "t" with a number are terms. Table 9-1 is an intermediate term table after processing the first sentence, and Table 9-2 is a term table after processing the second sentence.

After processing in the Sentence Processing Unit 26 for all the sentences in a paragraph, the Paragraph Processing Unit 25 in Figure 8 calls the Sentence Pair Set Processing Unit 27.

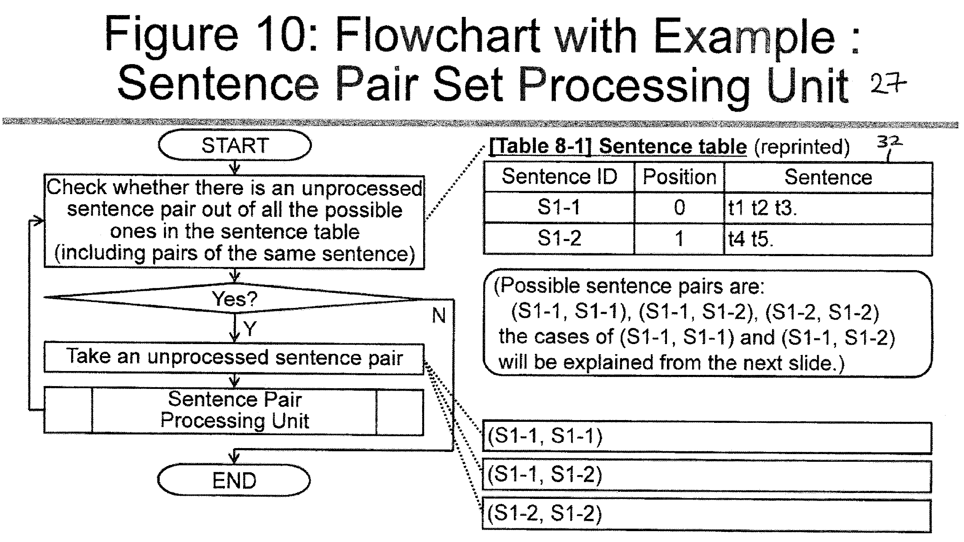

Figure 10 is a flowchart of the Sentence Pair Set Processing Unit 27.This unit calls the Sentence Pair Processing Unit 28 for all the possible sentence pairs in the sentence table. They include pairs whose elements refer to the same sentence. A threshold for the sentence distance may be introduced for ignoring distant sentence pairs. For the sentence table (Table 8-1), possible sentence pairs are (S1-1, S1-1), (S1-2, S1-2), and (S1-1, S1-2). The order of sentence pairs does not affect the final result.

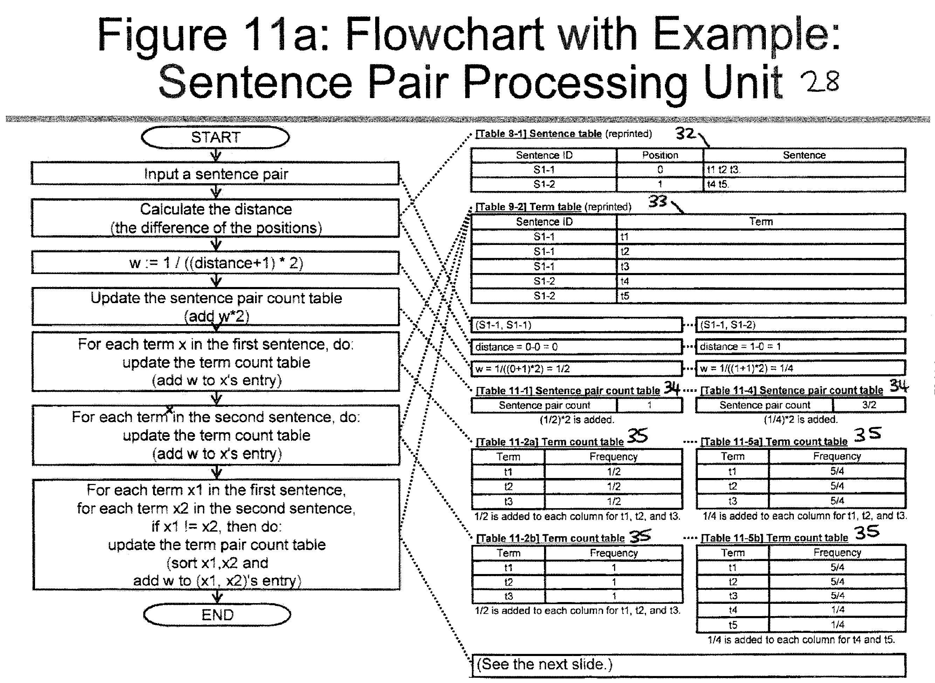

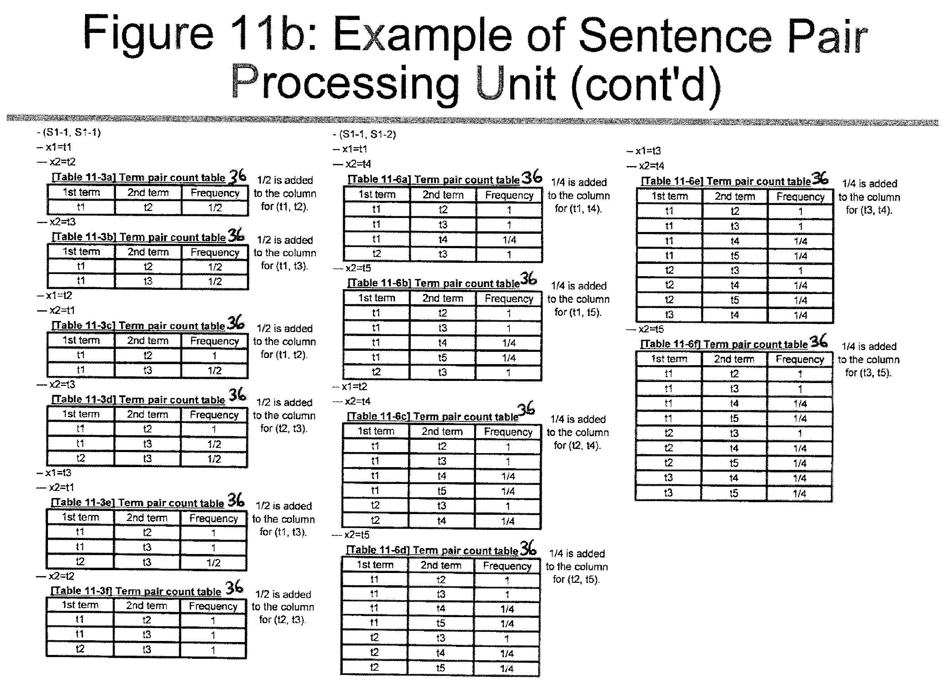

Figure 11 a is a flowchart of the Sentence Pair Processing Unit 28. The sentence pair processing unit 28 is operable to carry out the following process:
(a) for each of all pairs of sentences in a document, determine a weighting value w which is a decreasing function of the separation between the sentences in the sentence pair;
(b) determine a sentence pair count value, based on the sum of all the determined weighting values (the sentence pair count value is twice the sum of all the determined weighting values);
(c) obtain a document term count value ("term count value"), where the document term count value is the sum of sentence pair term count values determined for all the sentence pairs, each sentence pair term count value indicating the frequency with which a term occurs in a sentence pair and being based on the weighting value for the sentence pair (the sentence pair term count value for a term is the weighting value for the sentence pair in which the term occurs multiplied by the number of sentences (i.e. 1 or 2) in which the term occurs in that pair); and
(d) for each of all possible different term pairs in all sentence pairs, where a term pair consists of a term in one sentence of a pair paired with a different term in the other sentence of the pair, obtain a term pair count value which is the sum of the weighting values for all sentence pairs in which the term pair occurs.

In the example of Figure 11a, the processes for the sentence pairs (S1-1, S1-1), and (S1-1, S1-2) are shown. These two pairs are processed consecutively in this order for explanation as shown below.

First, the unit inputs a sentence pair. In the first process, it inputs (S1-1, S1-1). It then calculates the distance between the two sentences in the sentence pair. The distance is the difference between their position numbers. For (S1-1, S1-1), both position numbers are 0, so the distance is 0 (= 0-0).

It then calculates a weight for a sentence pair with the formula: $w = \frac{1}{\left(distance+1\right) \times 2}$

For (S1-1, S1-1), the distance is 0, so: $w = \frac{1}{\left(0+1\right) \times 2} = \frac{1}{2}$

Next, the unit updates the sentence pair count table 34 by adding w*2 to the existing value (if there is no existing value in the table, the unit creates a record and inserts the value to be added (or regards the existing value as 0). Similar processing is performed in the following table updates). For (S1-1, S1-1), the sentence pair count table 34 is updated to Table 11-1 in the described way.

Next, the unit updates the term count table 35 for all the terms in the first sentence in the sentence pair. It adds w to the existing value corresponding to each term. For (S1-1, S1-1), the term count table 35 is updated to Table 11-2a in the described way.

Next, the unit updates the term count table 35 for all the terms in the second sentence in the sentence pair similarly. It adds w to the existing value corresponding to each term. For (S1-1, S1-1), the term count table 35 is updated to Table 11-2b in the described way.

Next, the unit updates the term pair count table 36 for all the possible term pairs between the first and second sentences. It adds w to the existing value corresponding to each term pair. Note that a term pair consisting of the same terms is ignored because co-occurrence of the same words is not meaningful, and that before calculation two terms in a term pair are sorted in the same manner (for example, alphabetically) for all the term pairs because the order of the terms is irrelevant and should be consistent throughout processing. For (S1-1, S1-1): the term pair count table 36 is updated to Table 11-3a, Table 11-3b, Table 11-3c, Table 11-3d, Table 11-3e, and Table 11-3f one by one in the way described with reference to Figure 11 a.

The process for the next sentence pair (S1-1, S1-2) proceeds similarly. The unit 28 first inputs (S1-1, S1-2). It then calculates the distance between the sentences in the pair as 1 (=|1-0|) since the position numbers are 0 and 1. It then calculates w: $w = \frac{1}{\left(1+1\right) \times 2} = \frac{1}{4}$

Next, the tables are updated to: Table 11-4, Table 11-5a, Table 11-5b, Table 11-6a, Table 11-6b, Table 11-6c, Table 11-6d, Table 11-6e, and Table 11-6f in the described way.

In the above way, the Document Set Processing Unit 22 in Figure 6 processes all the documents in the document table. Finally, Table 101, Table 102, and Table 103 are obtained as the sentence pair count table 34, the term count table 35, and the term pair count table 36 respectively.

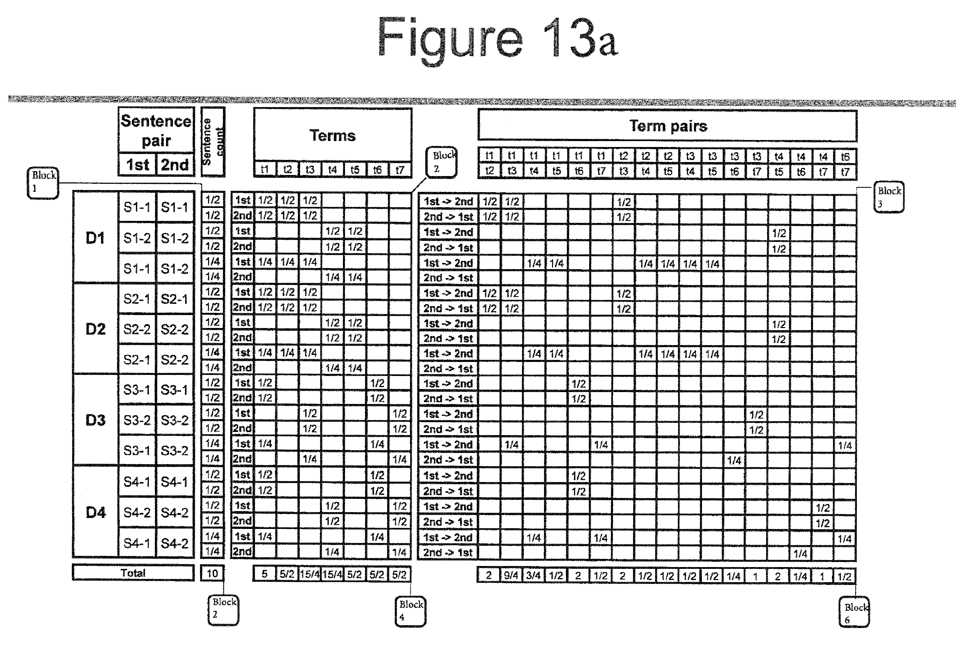

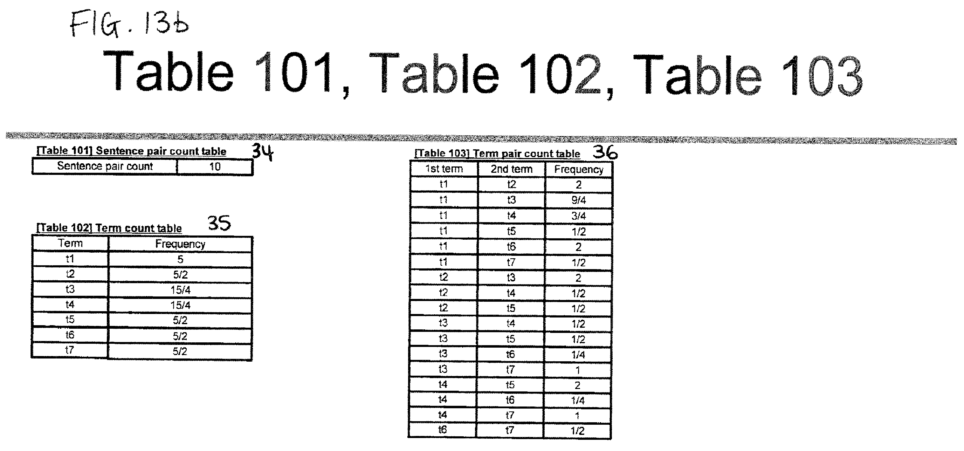

Figure 13a summarises the calculation above for understanding purposes. Block 2, Block 4, and Block 6 correspond to Table 101, Table 102, and Table 103 of Figure 13b respectively. Block 1, Block 3, and Block 5 describe all the added values to the final values in the corresponding columns in Block 2, Block 4, and Block 6 respectively.

The co-occurrence score set calculation unit 23 is operable to obtain a term co-occurrence score for each term pair using the document term count values for the terms in the pair, the term pair count value for the term pair and the sentence pair count value.

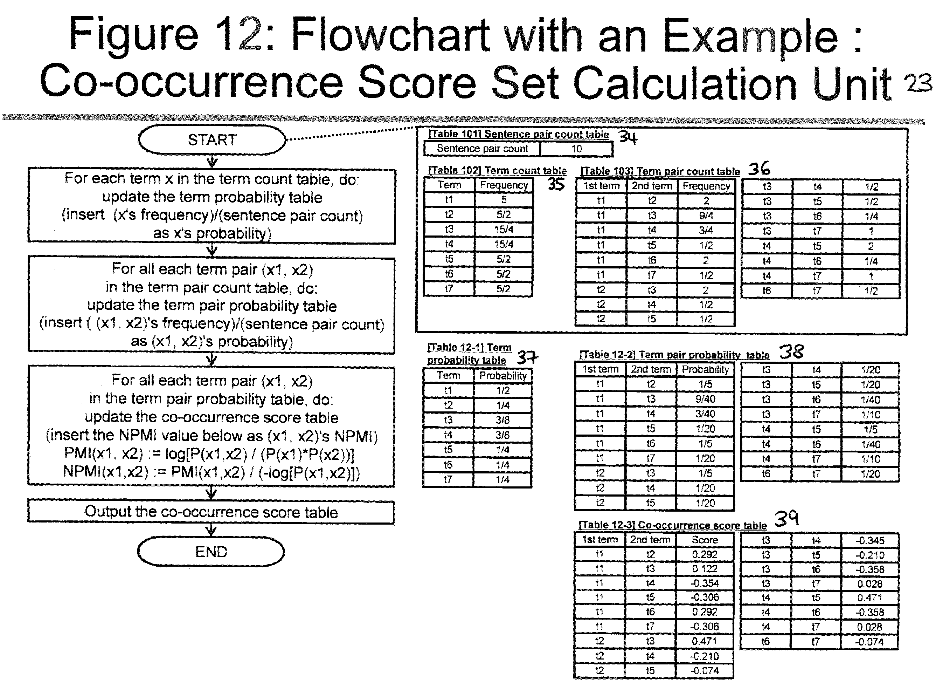

Figure 12 is a flowchart of the Co-occurrence Score Set Calculation Unit 23. The sentence pair count table (Table 101), the term count table (Table 102), and the term pair count table (Table 103) are input to the unit.

The unit 23 first creates the term probability table 37. For each term in the term count table 35, it inserts a record whose term is the term and whose probability is the term's frequency divided by the sentence pair count. For example, t1's probability is 5 divided by 10, that is, 1/2. As a result, Table 12-1 is created.

Next, the unit 23 creates the term pair probability table 38. For each term pair in the term pair count table 36, it inserts a record whose term pair is the term pair and whose probability is the term pair's frequency divided by the sentence pair count. For example, (t1, t2)'s probability is 2 divided by 10, that is, 1/5. As a result, Table 12-2 is created.

Next, the unit 23 creates the co-occurrence score table 39. For each term pair in the term pair probability table, it inserts a record whose term pair is the term pair and whose score is the NPMI value obtained with the formulas (1) + (2) and the probabilities in Table 12-1 and Table 12-2. For example, (t1, t2)'s score is calculated as follows. $PMI \left(t1,t2\right) = log \frac{\frac{1}{5}}{\frac{1}{2} \times \frac{1}{4}} = 0.204$ $PMI \left(t1,t2\right) = log \frac{0.204}{- log \frac{1}{5}} = 0.292$

As a result, Table 12-3 is created.

Finally, the unit 23 outputs the co-occurrence score table 39 to the client 1. The client 1 will use the table 39 for its application.

Viewing the values in Table 12-3, it can be seen that t2 (0.292) is more related to t1 than t5 (-0.306), and t2 (0.292) and t6 (0.292) are equally related to t1. Both of these relationships cannot be captured using the prior art methods described earlier.

### Second Embodiment

Figure 14 shows a block diagram of a system comprising apparatus in accordance with a second embodiment of the present invention.

Server 2 of Figure 14 has a co-occurrence score operation unit 200 (apparatus for calculating term co-occurrence scores) configured to analyse one or more text documents, and ascribe to pairs of terms, from terms which occur in the document, respective co-occurrence scores to indicate an extent of an association between them. The co-occurrence score operation unit 200 comprises a document set input unit 210, a document set processing unit 220 and a co-occurrence score set calculation unit 230 (co-occurrence score set calculation means), and associated tables: document table 300, paragraph table 310, sentence table 320, term table 330, sentence sequence count table 340, term count table 350, term pair count table 360, term probability table 370, term pair probability table 380 and co-occurrence score table 390. The document set processing unit 220 comprises a document processing unit 240. The document processing unit 240 comprises a paragraph processing unit 250, which in turn comprises a sentence processing unit 260 and a sentence sequence set processing unit 270. The sentence sequence set processing unit 270 comprises a sentence sequence processing unit 280 (sentence sequence processing means).

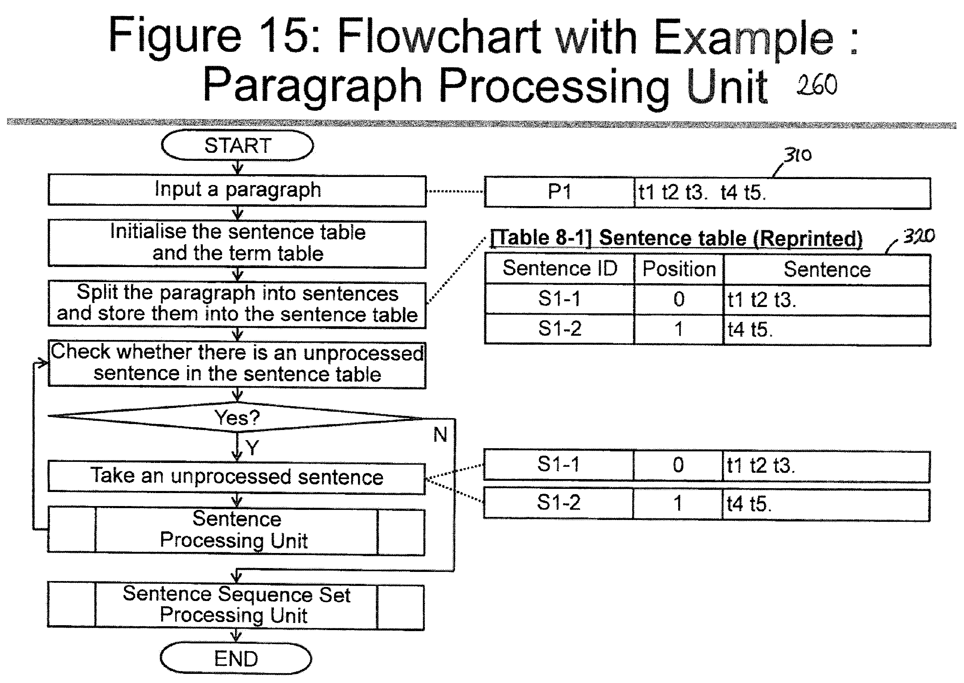

The Paragraph Processing Unit 250 of the present embodiment is different from the Paragraph Processing Unit 25 of the first embodiment, in that it has the Sentence Sequence Set Processing Unit 270 with the Sentence Sequence Processing Unit 280 inside instead of the Sentence Pair Set Processing Unit 27 with the Sentence Pair Processing Unit 28 inside. All the units of the second embodiment, except the Paragraph Processing Unit 250, the Sentence Sequence Set Processing Unit 270, and the Sentence Sequence Processing Unit 280,are the same as in the first embodiment. For this reason, only flowcharts (Figure 15, Figure 16, and Figure 17) for these three units are now explained.

Figure 15 is a flowchart of the Paragraph Processing Unit 250. This flowchart is almost the same as Figure 8 in the first embodiment, except that it contains the Sentence Sequence Set Processing Unit 270 instead of the Sentence Pair Set Processing Unit 27. All the other parts are the same, and explanation is omitted here.

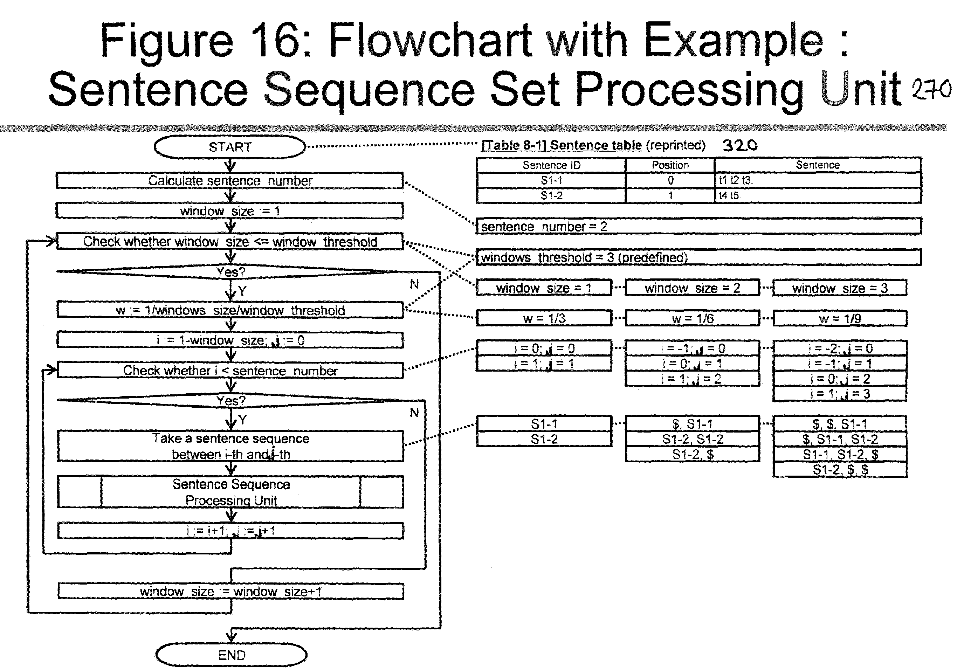

Figure 16 is a flowchart of the Sentence Sequence Set Processing Unit 270. Table 8-1 is used as a sentence table example. This unit first calculates the number of sentences ("sentence_number"). In this example, the number is 2. Next, the unit executes the outer loop for all window sizes (window size means the number of sentences in a sequence of sentences) from 1 to a prefixed window size threshold (3 in this example). Each execution of the outer loop goes as follows. The unit first calculates a weight for a sentence sequence with the formula: $w = \frac{1}{window_size \times window_threshold}$ where "window_size" is the window size already set in the beginning of the loop and "window_threshold" is the prefixed window size threshold explained above (the division by window_threshold is added so that the total weight of a term becomes 1 for understandability. This is not always needed). For the window sizes 1, 2, and 3, w is calculated as follows: $w = \frac{1}{1 \times 3} = \frac{1}{3} , w = \frac{1}{2 \times 3} = \frac{1}{6} , w = \frac{1}{3 \times 3} = \frac{1}{9}$

Next, the unit executes the inner loop for all the windows (i, j) from (1-window_size, 0) to (sentence_number-1, window_size+sentence_number-2), where a window (i, j) means the first and the last indexes of a sentence in the sentence table. The index starts from 0 (the 0-th is the first sentence), and any index <0 or >=sentence_number is ignored (denoted as "$" below).

Each execution of the inner loop goes as follows. The unit first takes a sentence sequence from the i-th sentence to the j-th sentence in the sentence table. All possible sentence sequences for all the window sizes are shown below:
▪ window_size=1 (w=1/3)
   - (i, j)=(0, 0): "S1-1"
   - (i, j)=(1, 1): "S1-2"
▪ window_size=2 (w=1/6)
   - (i, j)=(-1, 0): "$, S1-1"
   - (i, j)=(0, 1): "S1-1, S1-2"
   - (i, j)=(1, 2): "S1-2, $"
▪ window_size=3 (w=1/9)
   - (i, j)=(-2, 0): "$, $, S1-1"
   - (i, j)=(-1, 1): "$, S1-1, S1-2"
   - (i, j)=(0, 2): "S1-1, S1-2, $"
   - (i, j)=(1, 3): "S1-2, $, $"

The unit then calls the Sentence Sequence Processing Unit 280 for each sentence sequence.

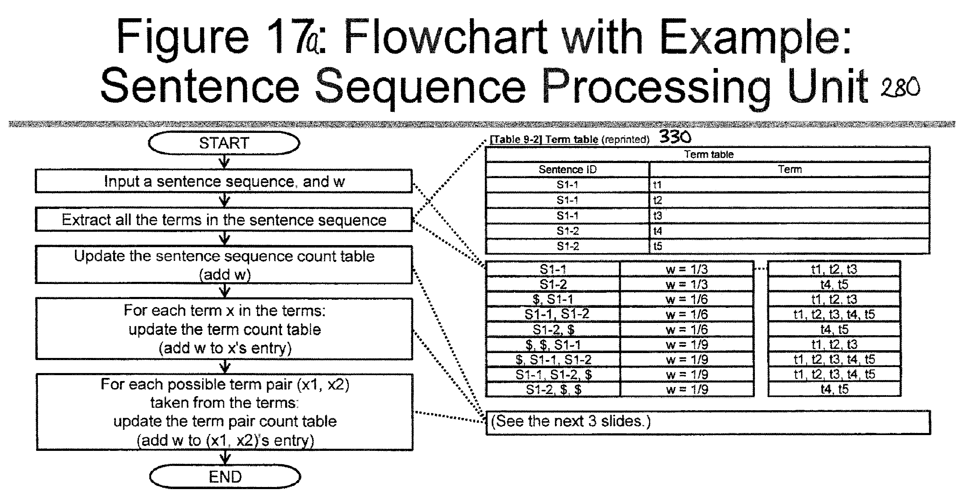

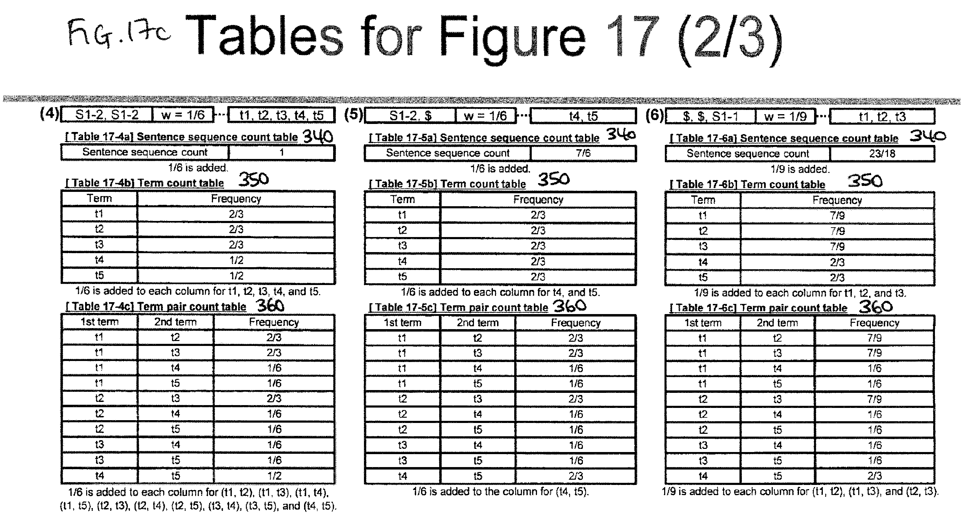

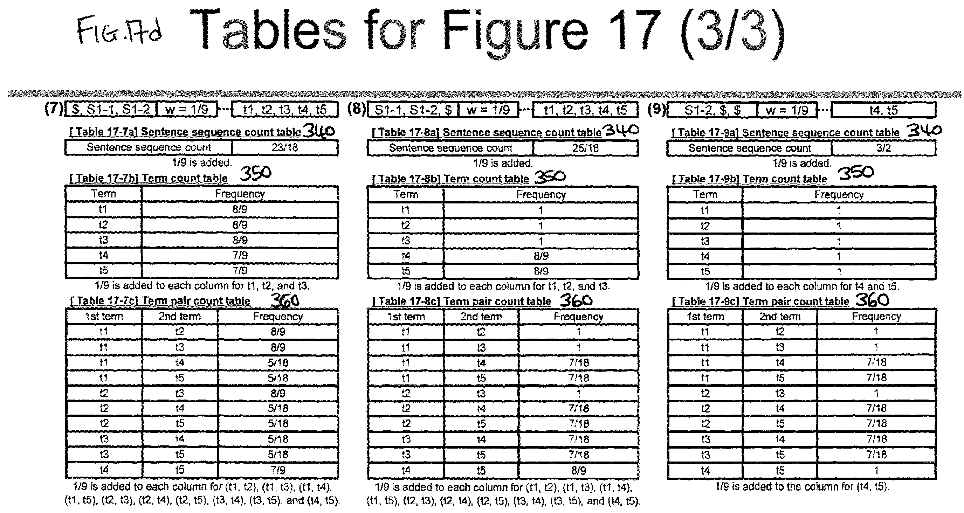

Figure 17a is a flowchart of the Sentence Sequence Processing Unit 280. The unit first inputs a sentence sequence and w calculated above. It then extracts all the terms (other than duplicate terms, which are ignored) in the sentence sequence as shown below:
▪ window_size=1 (w=1/3)
   - "S1-1": {t1, t2, t3}
   - "S1-2": {t4, t5}
▪ window_size=2 (w=1/6)
   - "$, S1-1": {t1, t2, t3}
   - "S1-1, S1-2": {t1, t2, t3, t4, t5}
   - "S1-2, $": {t4, t5}
▪ window_size=3 (w=1/9)
   - "$, $, S1-1": {t1, t2, t3}
   - "$, S1-1, S1-2": {t1, t2, t3, t4, t5}
   - "S1-1, S1-2, $": {t1, t2, t3, t4, t5}
   - "S1-1, S1-2, $": {t4, t5}

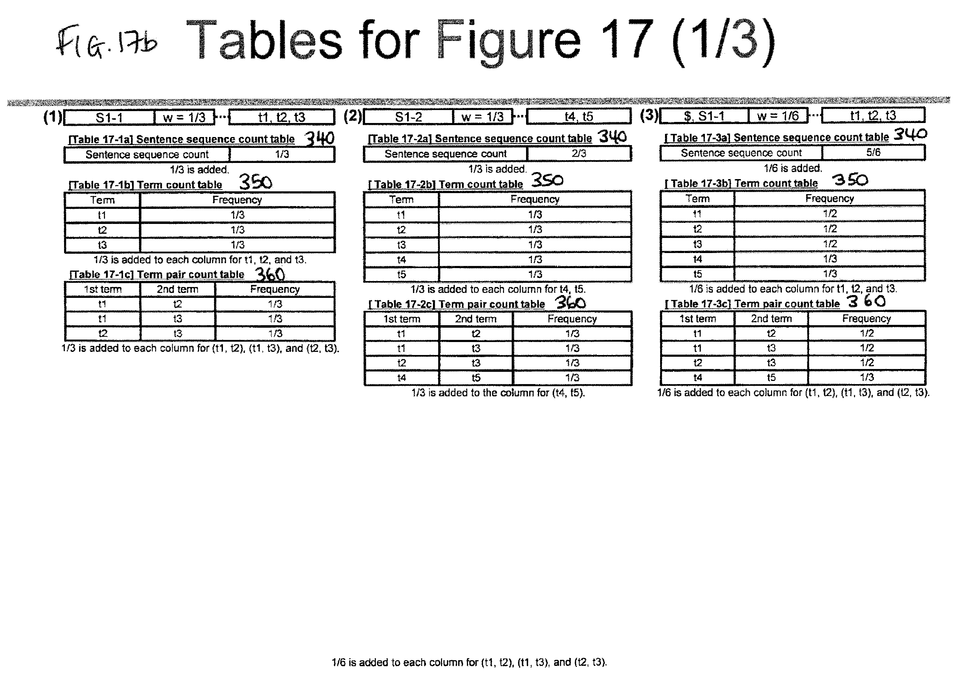

Next, it updates three tables. First, it updates the sentence sequence count table 340 by adding w. Second, it updates the term count table 350 by adding w to each column for all the terms extracted above. Third, it updates the term pair count table 360 by adding w to each column for all possible term pairs out of all the terms extracted above. The twenty-seven tables from Table 17-1 a to Table 17-9c, shown in Figures 17b to 17d, show how updating goes for all the nine sentence sequences shown above.

In the above way, the Document Set Processing Unit 220, like the Document Set Processing Unit 22 of Figure 6, processes all the documents in the document table 300. Finally, Table 104, Table 105, and Table 106 are obtained as the sentence sequence count table 340, the term count table 350, and the term pair count table 360 respectively.

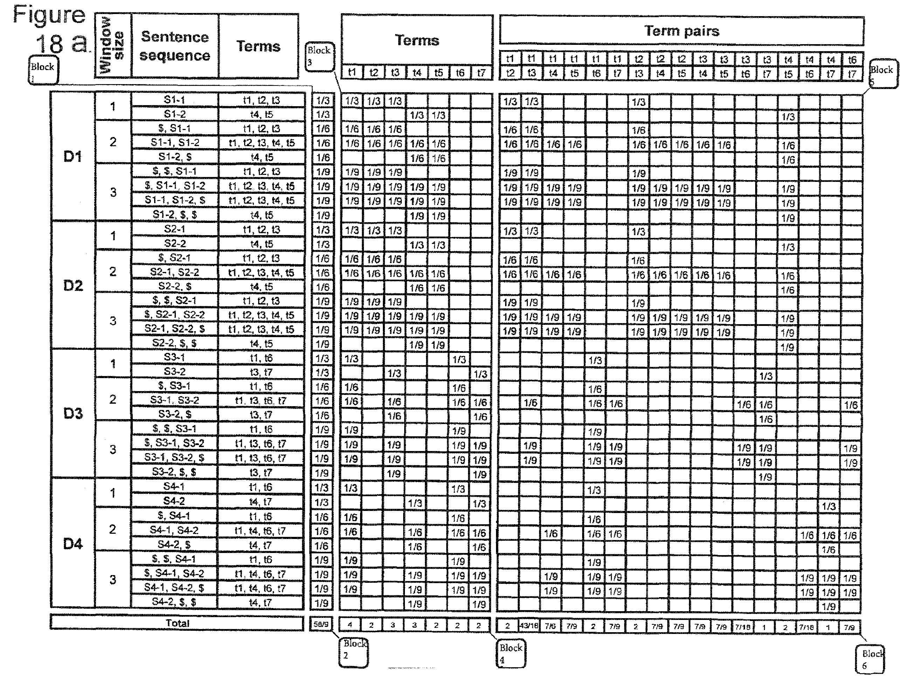

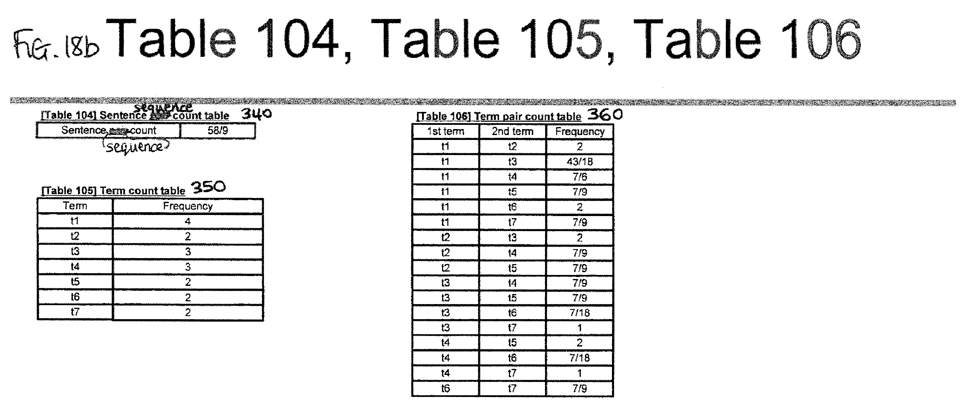

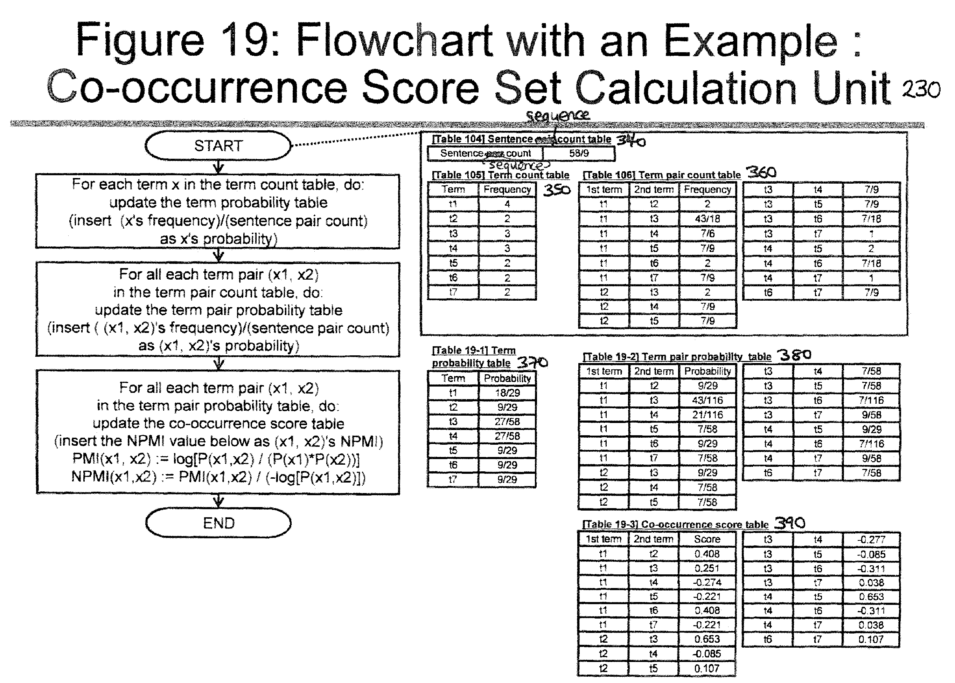

Figure 18a summarises the calculation above for understanding purposes. Block 2, Block 4, and Block 6 correspond to Table 104, Table 105, and Table 106 of Figure 18b respectively. Block 1, Block 3, and Block 5 describe all the added values to the final values in the corresponding columns in Block 2, Block 4, and Block 6 respectively. Figure 19 is a flowchart of the Co-occurrence Score Set Calculation Unit 230, the operation of which is the same as the unit 23 of Figure 12, except that the attached examples are different. The sentence sequence table 340 (Table 104), the term count table 350 (Table 105), and the term pair count table 360 (Table 106) are input to the unit 230. Calculation proceeds as with unit 23 in the first embodiment. As a result, Table 19-1, Table 19-2, and Table 19-3 are created in order.

Viewing the values in Table 19-3, it can be seen that t2 (0.408) is more related to t1 than t5 (-0.221), and t2 (0.408) and t6 (0.408) are equally related to t1. Both of these relationships cannot be captured using the prior art methods described earlier.

The four conditions (reprinted below) described above are satisfied in both embodiments:
A. Two terms which co-occur across one or more sentence boundaries should be taken into account.
B. If two term pairs co-occur in the same way in a document level and if one pair tends to co-occur closer in documents than another, give a higher score to the former.
C. The sentence length (number of terms) should not affect the result.
D. Scores should be probabilistically defined.

With regard to the condition A, the pair of (t1, t5) which never co-occurs in the same sentence is taken into account. With regard to the condition B, NPMI(t1, t2) > NPMI(t1, t5) holds. With regard to the condition C, NPMI(t1, t2) = NPMI(t1, t6) holds. With regard to the condition D, all the probabilities are well defined, and there are no additional adjustments are required after probabilities are calculated.

## Claims

1. A process of calculating term co-occurrence scores for use in a natural language processing method, where a term is a word or a group of consecutive words, in which process at least one text document is analysed and pairs of terms, from terms which occur in the document, are ascribed respective co-occurrence scores to indicate an extent of an association between them, the term co-occurrence score calculation process comprising:
for each of all pairs of sentences in a document, determining a weighting value w which is a decreasing function of the separation between the sentences in the sentence pair;
determining a sentence pair count value, which is twice the sum of all the determined weighting values;
obtaining a document term count value, where the document term count value is the sum of sentence pair term count values determined for all the sentence pairs, each sentence pair term count value indicating the frequency with which a term occurs in a sentence pair and being the weighting value for the sentence pair in which the term occurs multiplied by the number of sentences in which the term occurs in that pair; and
for each of all possible different term pairs in all sentence pairs, where a term pair consists of a term in one sentence of a pair paired with a different term in the other sentence of the pair, obtaining a term pair count value which is the sum of the weighting values for all sentence pairs in which the term pair occurs; and
obtaining a term co-occurrence score for each term pair using the document term count values for the terms in the pair, the term pair count value for the term pair and the sentence pair count value.

2. A process as claimed in claim 1, wherein the sentence pairs processed by the apparatus include pairs where the two sentences in the pair are the same sentence if that sentence contains more than one term.

3. A process as claimed in claim 1 or 2, wherein the weighting value w=1/(d + 1)*2, where d is the separation between the sentences in the pair.

4. A process as claimed in claim 1, 2 or 3, wherein obtaining a term co-occurrence score for each term pair comprises:
obtaining a term probability value P(a) for each term using the document term count value and the sentence pair count value;
obtaining a term pair probability value P(a, b) for each term pair using the term pair count value and the sentence pair count value; and
calculating the term co-occurrence score for each term pair using the term probability value for the terms in the pair and the term pair probability value for the term pair.

5. A process of calculating term co-occurrence scores for use in a natural language processing method, where a term is a word or a group of consecutive words, in which process at least one text document is analysed and pairs of terms, from terms which occur in the document, are ascribed respective co-occurrence scores to indicate an extent of an association between them, the term co-occurrence score calculation process comprising:
for each of all possible sequences of sentences in a document, where the minimum number of sentences in a sequence is one and the maximum number of sentences in a sequence has a predetermined value, determining a weighting value w which is a decreasing function of the number of sentences in the sentence sequence;
determining a sentence sequence count value, based on the sum of all the determined weighting values;
obtaining a document term count value, where the document term count value is the sum of sentence sequence term count values determined for all the sentence sequences, each sentence sequence term count value indicating the frequency with which a term occurs in a sentence sequence and being based on the weighting value for the sentence sequence;
for each of all possible different term pairs in all sentence sequences, where a term pair consists of a term in a sentence sequence paired with another term in the sentence sequence, obtaining a term pair count value which is the sum of the weighting values for all sentence sequences in which the term pair occurs; and
obtaining a term co-occurrence score for each term pair using the document term count values for the terms in the pair, the term pair count value for the term pair and the sentence sequence count value.

6. A process as claimed in claim 5, wherein for sentence sequences of two or more sentences, the sentence sequences processed by the apparatus include sequences where one or more of the sentences is a dummy sentence without terms.

7. A process as claimed in claim 5 or 6, wherein: the weighting value w is equal to 1 divided by the number of sentences in the sequence, and optionally also divided by the predetermined maximum sentence number.

8. A process as claimed in claim 7, wherein the sentence sequence count value is the sum of all the determined weighting values.

9. A process as claimed in claim 7 or 8, wherein each sentence sequence term count value for a term is the weighting value for the sentence sequence in which the term occurs.

10. A process as claimed in any one of claims 5 to 9, wherein obtaining a term co-occurrence score for each term pair comprises:
obtaining a term probability value P(a) for each term using the document term count value and the sentence sequence count value;
obtaining a term pair probability value P(a, b) for each term pair using the term pair count value and the sentence sequence count value; and
calculating the term co-occurrence score for each term pair using the term probability value for the terms in the pair and the term pair probability value for the term pair.

11. A natural language processing method comprising:
using the term co-occurrence score process of any one of claims 1 to 10 to obtain one or more term co-occurrence scores; and
using the or each obtained term co-occurrence score in a keyword clustering application, a recommendation system application, or a knowledge base construction application.

12. Apparatus for calculating term co-occurrence scores for use in a natural language processing method, where a term is a word or a group of consecutive words, in which apparatus at least one text document is analysed and pairs of terms, from terms which occur in the document, are ascribed respective co-occurrence scores to indicate an extent of an association between them, the apparatus comprising sentence pair processing means and co-occurrence score set calculation means, wherein:
the sentence pair processing means are operable to:
for each of all pairs of sentences in a document, determine a weighting value w which is a decreasing function of the separation between the sentences in the sentence pair;
determine a sentence pair count value, which is twice the sum of all the determined weighting values;
obtain a document term count value, where the document term count value is the sum of sentence pair term count values determined for all the sentence pairs, each sentence pair term count value indicating the frequency with which a term occurs in a sentence pair and being the weighting value for the sentence pair in which the term occurs multiplied by the number of sentences in which the term occurs in that pair; and
for each of all possible different term pairs in all sentence pairs, where a term pair consists of a term in one sentence of a pair paired with a different term in the other sentence of the pair, obtain a term pair count value which is the sum of the weighting values for all sentence pairs in which the term pair occurs; and
the co-occurrence score set calculation means are operable to obtain a term co-occurrence score for each term pair using the document term count values for the terms in the pair, the term pair count value for the term pair and the sentence pair count value.

13. Apparatus for calculating term co-occurrence scores for use in a natural language processing method, where a term is a word or a group of consecutive words, in which apparatus at least one text document is analysed and pairs of terms, from terms which occur in the document, are ascribed respective co-occurrence scores to indicate an extent of an association between them, the apparatus comprising sentence sequence processing means and co-occurrence score set calculation means, wherein:
the sentence sequence processing means are operable to:
for each of all possible sequences of sentences in a document, where the minimum number of sentences in a sequence is one and the maximum number of sentences in a sequence has a predetermined value, determine a weighting value w which is a decreasing function of the number of sentences in the sentence sequence;
determine a sentence sequence count value, based on the sum of all the determined weighting values;
obtain a document term count value, where the document term count value is the sum of sentence sequence term count values determined for all the sentence sequences, each sentence sequence term count value indicating the frequency with which a term occurs in a sentence sequence and being based on the weighting value for the sentence sequence; and
for each of all possible different term pairs in all sentence sequences, where a term pair consists of a term in a sentence sequence paired with another term in the sentence sequence, obtain a term pair count value which is the sum of the weighting values for all sentence sequences in which the term pair occurs; and
the co-occurrence score set calculation means are operable to obtain a term co-occurrence score for each term pair using the document term count values for the terms in the pair, the term pair count value for the term pair and the sentence sequence count value.

14. A natural language processing apparatus operable to obtain one or more term co-occurrence scores using the apparatus of claim 12 or 13, and use the or each obtained term co-occurrence score in a keyword clustering application, a recommendation system application, or a knowledge base construction application.
